# EUROPÄISCHE PATENTSCHRIFT

(11) **EP 3 587 968 B1**
(45) Veröffentlichungstag und Bekanntmachung des Hinweises auf die Patenterteilung: **01.12.2021**
(21) Anmeldenummer: 19182186.7
(22) Anmeldetag: 25.06.2019
(51) Int. Cl.: F25D 17/02, F24D 3/10

(54) **FLUIDSYSTEM**
FLUID SYSTEM
SYSTÈME FLUIDIQUE

(30) Priorität: 27.06.2018 DE 102018115423
(43) Veröffentlichungstag der Anmeldung: 01.01.2020
(73) Patentinhaber: Viessmann Refrigeration Solutions GmbH, 35108 Allendorf (DE)
(72) Erfinder: Stache, Moritz, 67551 Worms (DE); Geitz, Benedikt, 55127 Mainz (DE)
(74) Vertreter: Sperschneider, Alexandra

(56) Entgegenhaltungen:
- WO-A1-2015/024554
- AT-U1- 12 588
- DE-U1-202013 105 851
- DELPECH P: "BOUTEILLES CASSE-PRESSION ET DE MELANGE, CONCEPTION ET COMPORTEMENT", CFP CHAUD FROID PLOMBERIE, EDITIONS PARISIENNES. PARIS, FR, Nr. 596, 1. November 1997 (1997-11-01), Seiten 119-124, XP000724699, ISSN: 0750-1552

## Beschreibung

Es wird ein Fluidsystem mit einem Hauptverteilkreis mit einem Vorlauf und einem Rücklauf, in dem ein Fluid zur Wärmeübertragung geführt ist, wobei der Hauptverteilkreis an eine Einrichtung zur Bereitstellung einer einstellbaren Temperatur für das Fluid angeschlossen ist, und mit mindestens zwei an den Hauptverteilkreis angeschlossenen Nebenkreisen beschrieben.

Das Fluidsystem kann zur Bereitstellung eines erwärmten Fluids für Heizkreise oder zur Bereitstellung eines gekühlten Fluids für Kühlkreisläufe Verwendung finden. Die Wärmeübertragung des Fluids kann in beide Richtungen erfolgen. Auf der einen Seite kann das Fluid erwärmt werden und diese Wärme über Verbraucher abgeben. Auf der anderen Seite kann das Fluid auch gekühlt werden und Wärme über die Verbraucher aufnehmen, sodass ein Kühlen bereitgestellt wird.

Solche Kühlkreisläufe können beispielsweise für weit verzweigte Kreisläufe mit einer Vielzahl an Kühleinrichtungen verwendet werden. Solche Kühleinrichtungen werden beispielsweise für Kühlräume, Kühlhallen und Supermärkte eingesetzt. Als Fluid kann beispielsweise ein Kühlmittel in dem Fluidkreislauf umgewälzt werden. Das Kühlmittel kann beispielsweise eine Sole (Salzwassergemisch) sein.

Im Weiteren kann die Einrichtung zum Bereitstellen einer einstellbaren Temperatur für das Fluid eine Flüssigkeit zur Wärme-/Kälteerzeugung verwenden, die in einem separaten Kreislauf geführt wird.

### Stand der Technik

Heiz- oder Kühlkreisläufe mit einem weit verzweigten Netz mit mehreren, parallel geschalteten Strängen, die an einen Hauptkreislauf angeschlossen sind, weisen mehrere Nachteile auf. Zum einen nimmt die Temperatur des Fluids zum Erwärmen oder Kühlen entlang der Strecke der Leitungen ab bzw. zu. Zum anderen kommt es auch zu Druckabfällen entlang der Leitungen. Hieraus entstehen erhebliche Probleme hinsichtlich des hydraulischen Abgleichs.

Um auch weit entfernten Verbrauchern ein Fluid (zum Beispiel Kühlmittel) mit einer ausreichend niedrigen Temperatur zuführen zu können, muss beispielsweise das Kühlmittel über eine Kältemaschine deutlich weiter herabgekühlt werden, als dies eigentlich erforderlich wäre. Hierüber wird dann der Temperaturanstieg entlang der Leitungen ausgeglichen. Dies hat jedoch auch zur Folge, dass nahe an der Kältemaschine angeordnete Verbraucher mit Kühlmittel versorgt werden, das eine sehr geringe Temperatur aufweist. In Folge dessen kann es zu einem Abschalten einer Zuführeinrichtung (beispielsweise Ventil) kommen, da ansonsten eine unerwünschte Eisbildung am nahegelegenen Verbraucher auftreten würde.

In analoger Weise entstehen Probleme bei Heizkreisläufen, wenn die Temperatur des Fluids übermäßig erhöht werden muss, um auch fernab gelegene Verbraucher noch mit ausreichender Wärme zu versorgen. Um dem Problem des hydraulischen Abgleichs entgegen zu treten, wurde im Stand der Technik bereits vorgeschlagen, drehzahlgeregelte Förderpumpen für die Verbraucher vorzusehen, sodass diese bedarfsabhängig gekühlt werden können. Eine solche Kühleinheit ist beispielsweise in EP 3 076 106 A2 beschrieben.

Darüber hinaus ist es aus dem Stand der Technik bekannt, einen Verbraucherkreislauf von einem Erzeugerkreislauf über eine hydraulische Weiche hinweg zu entkoppeln. Der Kälte-/Wärmebedarf im Verbraucherkreislauf kann daher im Wesentlichen unabhängig von der Förderleistung im Erzeugerkreislauf erfolgen.

Eine solche Anordnung bietet jedoch für sehr weitläufige Fluidkreisläufe mit parallelen Strängen keine zufriedenstellende Lösung. Beispielsweise kann es beim Ausfall einer zentralen Fördereinrichtung für den Verbraucherkreislauf zu einem Ausfall sämtlicher Verbraucher kommen. Zudem ergibt sich über die Länge der Leitungen hinweg ein weiterer Temperaturanstieg, welcher insbesondere für Verbraucher mit verschiedenen Temperaturanforderungen Probleme darstellt.

DELPECH P, "BOUTEILLES CASSE-PRESSION ET DE MELANGE, CONCEPTION ET COMPORTEMENT", CFP CHAUD FROID PLOMBERIE, EDITIONS PARISIENNES. PA-RIS, FR, (19971101), no. 596, ISSN 0750-1552, Seiten 119 - 124, XP000724699, offenbart einen Fluidkreislauf mit einem Hauptverteilkreis, der einen Vorlauf und einen Rücklauf aufweist. Der Hauptverteilkreis weist eine zentrale Fördereinrichtung auf, wobei an den Hauptverteilkreis zwei parallele Nebenkreise angeschlossen und die Nebenkreise jeweils über eine Strangweiche an den Hauptverteilkreis angeschlossen sind. Die Nebenkreise weisen eine Pumpe auf, die im Vorlauf der Nebenkreise angeordnet ist.

WO 2015/024554 A1 offenbart weiter ein Temperier- und Wärmerückgewinnungssystem für eine mit einem Fluid temperierbare Maschine, wie beispielsweise eine Spritzgussmaschine mit beheizbaren Werkzeugen. Das darin beschriebene System weist einen Wärmespeicher auf, von dem Primärleitungen für Niedrigtemperatur, Mitteltemperatur und Hochtemperatur abgehen. Diese Primärleitungen sind jeweils mit Maschinen über Mischerweicheneinheiten verbunden. Die Primärleitungen münden in diese Mischerweicheneinheiten, sodass über die Mischerweicheneinheiten durch eine entsprechende Steuerung von Pumpen und Ventilen für die Produktionsmaschinen zumindest drei verschiedene Temperaturbereiche für das Fluid bereitgestellt werden können.

DE 20 2013 105 851 U1 offenbart ein System mit einer Sammler- und Verteilereinheit, die eine gemeinsame Weiche für verschiedene Heizkreise aufweist, wobei die Sammler- und Verteilereinheit aus Einzelteilen besteht, sodass die Sammler- und Verteilereinheit leichter transportiert werden kann. Im Betrieb sind die einzelnen Teile der Sammler- und Verteilereinheit miteinander verbunden und bilden eine gemeinsame Weiche.

AT 12 588 U1 offenbart eine hydraulische Weiche, an die mehrere parallele Nebenkreise angeschlossen sind. Die Nebenkreise selbst sind über einen als hydraulische Weiche ausgebildeten Pufferspeicher und einen Warmwasserspeicher mit Schwimmbecken bzw. mit einem Vorwärmespeicher verbunden.

### Aufgabe

Es besteht daher die Aufgabe darin ein Fluidsystem mit mindestens zwei parallelen Strängen anzugeben, das die Probleme des Stands der Technik behebt und eine Versorgung einer Vielzahl von Verbrauchern in einem insbesondere weitläufigen Fluidsystem bereitstellt, wobei zusätzlich ein hydraulischer Abgleich und eine energieeffiziente Temperierung möglich sind.

### Lösung

Die vorstehend genannte Aufgabe wird durch ein Fluidsystem gelöst, mit einem Hauptverteilkreis mit einem Vorlauf und einem Rücklauf, in dem ein Fluid zur Wärmeübertragung geführt ist, wobei der Hauptverteilkreis an eine Einrichtung zur Bereitstellung einer einstellbaren Temperatur für das Fluid angeschlossen ist, und mit mindestens zwei an den Hauptverteilkreis angeschlossenen Nebenkreisen, wobei die Nebenkreise jeweils mindestens einen Verbraucher und eine hydraulische Strangweiche aufweisen, über welche die Nebenkreise an den Hauptverteilkreis angeschlossen sind. Das Fluidsystem weist ferner jeweils eine im Rücklauf der Nebenkreise angeordnete erste Fördereinrichtung auf, die der Strangweiche in Fluidströmungsrichtung nachgeschaltet ist. Jeder Strangweiche ist daher mindestens eine erste Fördereinrichtung zugeordnet. Über diese Fördereinrichtungen kann der hydraulische Abgleich jedes einzelnen Nebenkreises erfolgen und der geforderte, variable Volumenstrom dem jeweiligen Nebenkreis zugeführt werden.

Die Nebenkreise (Stränge) sind dabei parallel geschaltet. Der Hauptverteilkreis mit den Nebenkreisen bildet den Verbraucherkreis. Der Erzeugerkreis ist durch die Einrichtung gebildet.

Die hierin beschriebene Lösung ermöglicht eine Entkopplung der Nebenkreise vom Hauptkreis eines Verbraucherkreislaufs. Das Fluidsystem weist mindestens zwei Nebenkreise auf, die hydraulisch parallel geschaltet sind. Jeder dieser Nebenkreise weist eine separate für seinen Strang vorgesehen Strangweiche auf, sodass eine hydraulische Parallelschaltung von zwei oder mehreren hydraulischen Strangweichen bereitgestellt wird.

Die einzelnen Nebenkreise (Stränge) des Fluidkreislaufs werden daher von dem Hauptverteilkreis entkoppelt, sodass für die jeweiligen Stränge eine bedarfsabhängige Kälte-/Wärmezufuhr ermöglicht wird.

Die Einrichtung zur Bereitstellung einer einstellbaren Temperatur für das Fluid kann beispielsweise eine Kältemaschine oder eine Heizvorrichtung sein. Die Einrichtung kann beispielsweise eine Wärmepumpe, eine Gas- oder Feststoffbrenneinrichtung oder eine solarbetriebene Wärmeeinrichtung sein. Das Fluid im Hauptverteilkreis und in den Nebenkreisen kann beispielsweise eine Sole sein. Ein Kältemittel, das beispielsweise auf der Erzeugerseite in der Einrichtung geführt ist, ist von dem Fluid im Hauptverteilkreis entkoppelt. In der Einrichtung kann bspw. Glykol als Kühlmittel eingesetzt werden. Die Übertragung der Heiz- oder Kühlleistung durch die Einrichtung kann verschiedenartig auf den Hauptverteilkreis und das darin geführte Fluid erfolgen. In der Regel weist die Einrichtung einen Wärmetauscher auf, der zur Übertragung der bereitgestellten Wärme an das Fluid im Fluidkreislauf bzw. im Hauptverteilkreis vorgesehen ist.

Der mindestens eine Verbraucher in den Nebenkreisen kann beispielsweise eine Kühltheke, ein Kühlregal, eine Gefriertruhe, ein Kühlraum, ein Gefrierraum und/oder ein Kühlschrank sein. Die vorstehende Aufzählung ist nicht abschließend, sodass auch andere Kühleinrichtungen mit umfasst sind. Analog können anstelle von Kühleinrichtungen auch Heizeinrichtungen als Verbraucher bei einem entsprechenden Heizkreislauf vorgesehen sein.

In weiteren Ausführungsformen kann die beispielsweise bei der Erzeugung von Kälte entstehende Abwärme für einen separaten Heizkreislauf verwendet werden. Der Fluidkreislauf kann daher in einem System vorgesehen sein, das sowohl die bereitgestellte Kälte als auch die anfallende Abwärme nutzt. In einem solchen System können vorzugweise Wärmepumpen eingesetzt werden.

Das Fluidsystem eignet sich beispielsweise für Supermärkte mit einer Vielzahl von Kühleinrichtungen, wobei die einzelnen Kühleinrichtungen oftmals weit abgelegen von der Kältemaschine angeordnet sind. Der Hauptverteilkreis weist daher eine sehr große Länge auf. Diesbezüglich sind die Anforderungen an den hydraulischen Abgleich für den Hauptverteilkreis sehr hoch. Durch die Parallelschaltung der Nebenkreise über die Strangweichen hinweg werden die einzelnen Stränge/Nebenkreise für sich hydraulisch abgeglichen und können mit dem geforderten Volumenstrom an Fluid versorgt werden.

Der hydraulische Abgleich über die Strangweichen sorgt zudem dafür, dass die Einrichtung zur Bereitstellung einer einstellbaren, veränderbaren Temperatur konstanter betrieben werden kann und weniger Schwankungen hinsichtlich der zu erreichenden Temperatur und des zu temperierenden Volumens an Fluid unterliegt. Die zu erreichende Temperatur kann durch eine zentrale Steuerung verändert werden. Die zu erreichende Temperatur kann nach Maßgabe weiterer Einflüsse und Parameter, die auf das Fluidsystem Einfluss haben, eingestellt werden.

Die erste Fördereinrichtung kann insbesondere im Rücklauf des Nebenkreises in Fluidströmungsrichtung vor einer Verbindungsstelle an den Rücklauf des Hauptverteilkreises angeordnet sein. Der Hauptverteilkreis weist daher keine zentrale Versorgungseinrichtung, wie beispielsweise eine Pumpe, auf. Die benötigte Menge an Fluid wird über die dezentralen ersten Fördereinrichtungen der jeweiligen Nebenkreise gefördert. Durch den Wegfall einer zentralen Versorgungseinrichtung im Hauptverteilkreis kann beispielsweise auf Strangregulierventile und Verteiler verzichtet werden. Durch die ersten Fördereinrichtungen in den Nebenkreisen, welche die jeweils für den entsprechenden Nebenkreis benötigten Volumenströme bereitstellen, können im Vergleich zu einer zentral angeordneten Fördereinrichtung im Hauptverteilkreis im Teillastbetrieb eine höhere Effizienz erzielt und damit Betriebskosten eingespart werden.

Ein weiterer Vorteil, der durch die dezentralen ersten Fördereinrichtungen erzielt wird, liegt darin, dass das Fluidsystem durch die dezentralen ersten Fördereinrichtungen eine Teilredundanz erhält, sodass in einem Havariefall Warenschäden/Ausfälle auf einzelne Nebenkreise beschränkt werden könkönnen und nicht das gesamte System außer Betrieb gesetzt werden muss oder ausfällt.

Das hierin beschriebene Fluidsystem eignet sich insbesondere auch für Systeme, die in Gebäuden eingesetzt werden. Aufgrund der steigenden Kälte-/Wärmeverbraucheranzahl in den Gebäuden (bspw. Kühlstellenanzahl im Lebensmitteleinzelhandel) oder Verglasung der Kühlstellen und damit auch eine Erhöhung der Anzahl von Verbrauchern je Nebenkreis, ist zur Bereitstellung eines stabilen Betriebsmodus für solche Systeme eine Regelung erforderlich, welche durch das hierin beschriebenen Fluidsystem erreicht wird.

Durch die hydraulische Entkopplung der Nebenkreise wird sowohl ein hydraulischer Abgleich für die Nebenkreise bereitgestellt als auch die Förderstromregelung des Fluids im Teillastbetrieb verbessert. Die Anordnung der ersten Fördereinrichtungen im Rücklauf des Nebenkreises, insbesondere in Fluidströmungsrichtung vor einer Verbindungsstelle an den Rücklauf des Hauptverteilkreises, stellt sicher, dass es zu keiner Durchmischung innerhalb der Strangweichen kommt und der Hauptverteilkreis gänzlich ohne Fördereinrichtungen auskommen kann.

Der Fluidkreislauf kann in weiteren Ausführungen mehrere Nebenkreise aufweisen, die jeweils über eine separate Strangweiche an den Hauptverteilkreis angeschlossen sind, wobei jedem Nebenkreis eine Verbrauchergruppe zugeordnet ist. Diese Ausführung bietet die Möglichkeit einzelne Verbraucher zusammen zu fassen, sodass für diese eine separate Steuerung des benötigten Fluidbedarfs über eine zugeordnete Strangweiche erfolgt.

Dabei können die Verbrauchergruppen sich durch deren Art, Größe, Position, benötigte Fluidtemperatur und/oder deren Leistungsvermögen unterscheiden. Beispielsweise können Verbraucher, die in einem Raum oder Abschnitt bzw. Abteil eines Gebäudes angeordnet sind, zusammengefasst werden. Im Weiteren können beispielsweise Gefrierschränke in einem separaten Nebenkreis und Kühlregale in einem weiteren, separaten Nebenkreis zusammengefasst sein. Ferner ist es denkbar, Kühlgeräte (analog auch Wärmeeinrichtungen) in Abhängigkeit deren Größe zu jeweiligen Nebenkreisen zusammenzufassen. Auch das Leistungsvermögen kann für die Zusammenfassung von Verbrauchern in Nebenkreisen maßgeblich sein.

In weiteren Ausführungsformen werden auch Verbraucher zusammengefasst, die verschiedene Anforderungen an den benötigten Kühlbedarf über das Fluid aufweisen, sodass beispielsweise ein Gesamtkühlbedarf für den jeweiligen Nebenkreis im Wesentlichen ähnlich zum Kühlbedarf von parallelen Nebenkreisen ist. Dadurch wird verhindert, dass es zu einem zu starken Durchströmen der Strangweichen kommt, wenn beispielsweise ein Nebenkreis nur Gefriereinrichtungen aufweist, die eine Temperatur von -20° bereitstellen, wobei die Verbraucher in einem parallelen Nebenkreis lediglich eine Kühltemperatur von 4° Celsius bereitstellen.

Der mindestens eine Verbraucher kann selbst eine zweite Fördereinrichtung aufweisen, über die der zweite Verbraucher bedarfsabhängig die Menge Fluid aus dem jeweiligen Nebenkreis bezieht, die benötigt wird. Dies führt zu einer weiteren Entlastung innerhalb der Nebenkreise, sodass das Gesamtsystem mit dem Fluidkreislauf vor allem in Hinblick auf den Energiebedarf effizienter betrieben werden kann. Für das Fluidsystem bedeutet dies, dass die Anforderungen an die Einrichtung zur Kälte- oder Wärmeerzeugung weiter reduziert werden. So müssen bspw. Wärmepumpen weniger takten. Allgemein ist es vorteilhaft, wenn der Kühl-/Wärmebedarf und damit der Betrieb einer Einrichtung konstant gehalten werden.

Mindestens ein Nebenkreis kann eine dritte Fördereinrichtung aufweisen. Die dritte Fördereinrichtung kann beispielsweise zum Umwälzen des Fluids vorgesehen sein, wenn der Nebenkreis beispielsweise über eine Wärmeübertragungseinrichtung mit einem daran angeschlossenen Fluidkreislauf gekoppelt ist. Ein solcher zweiter Fluidkreislauf kann beispielsweise dann vorgesehen sein, wenn der Verbraucher als Tiefkühlraum ausgebildet ist. Die über das Fluid bereitgestellte Kälte kann bei einem Kühlsystem für Kühlregale mit einer Temperatur von 4°C nicht ausreichend sein, um den Tiefkühlraum entsprechend herabzukühlen (z. B. -20°C). Daher ist die Wärmeübertragungseinrichtung erforderlich, welche die über das Fluid bereitgestellte Temperatur auf ein für den Tiefkühlraum erforderliches Niveau bringt. Die Kühlflüssigkeit, die in dem zweiten Fluidkreislauf geführt ist, kommt daher nicht direkt in Kontakt mit dem Fluid des Hauptverteilkreises. Die dritte Fördereinrichtung ist in diesem Ausführungsbeispiel dann erforderlich, um das Fluid im Nebenkreis entsprechend durch die Wärmeübertragungseinrichtung zu fördern.

Die erste Fördereinrichtung, die zweite Fördereinrichtung und/oder die dritte Fördereinrichtung können drehzahlgeregelte Pumpen sein. Drehzahlgeregelte Pumpen ermöglichen eine bedarfsabhängige Förderung des Fluids. Insbesondere ist eine stufenlose Anpassung der Fördermenge des Fluids möglich, sodass für den jeweiligen Verbraucher und die Nebenkreise eine entsprechende Menge an Fluid gefördert wird. Zur Steuerung der drehzahlgeregelten Pumpen kann eine Zentralsteuerung für das Fluidsystem vorgesehen sein. In weiteren Ausführungen können die jeweiligen Nebenkreise ihre zugehörigen ersten Fördereinrichtungen separat ansteuern, wobei zusätzlich eine übergeordnete Erfassung und Regelung vorgesehen sein kann.

Der Hauptverteilkreis kann eine hydraulische Weiche aufweisen, über die der Hauptverteilkreis mit der Einrichtung zur Bereitstellung einer einstellbaren Temperatur gekoppelt ist. Hierüber wird eine erste Entkopplung des Hauptverteilkreises (Verbraucherseite) von der Erzeugerseite mit der Einrichtung bereitgestellt. Damit wird ein erster hydraulischer Abgleich zwischen der Verbraucherseite und der Erzeugerseite erreicht.

Die Einrichtung zur Bereitstellung einer einstellbaren Temperatur kann in weiteren Ausführungen einen separaten Fluidkreislauf aufweisen, der mit dem Fluidkreislauf des Hauptverteilkreises thermisch direkt oder indirekt verbunden ist. Der separate Fluidkreislauf kann ferner weitere Einrichtungen wie beispielsweise eine Förderpumpe zum Umwälzen des darin geführten Fluids (z. B. Kältemittel) aufweisen.

Das hierin beschriebene Fluidsystem kann ferner weitere Bestandteile aufweisen, die nicht explizit aufgeführt sind. Hierzu zählen beispielsweise Ventile und Absperreinrichtungen Rückschlagklappen sowie Mess- und Regeleinrichtungen. Messeinrichtungen umfassen beispielsweise Temperatursensoren, die zur Erfassung der Temperatur des Fluids an den verschiedenen Positionen im Fluidkreislauf dienen. Regeleinrichtungen umfassen die Fördereinrichtungen bzw. die Pumpen sowie Steuereinheiten, die zum Betrieb der Regeleinrichtungen erforderlich sind.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine schematische Darstellung eines Fluidsystems mit einem Hauptverteilkreis und an diesen über Strangweichen angeschlossene Nebenkreise einer ersten Ausführungsform; und
- Fig. 2: eine schematische Darstellung eines Fluidsystems mit einem Hauptverteilkreis und an diesen über Strangweichen angeschlossene Nebenkreise einer zweiten Ausführung.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Bestandteile selbst und deren Funktion bereits beschrieben wurden oder für einen Fachmann bekannt sind. Bestandteile, die exemplarisch dargestellt sind und sich für einen Fachmann ergeben, sind im Nachfolgenden ebenfalls nicht explizit aufgeführt. Dies trifft insbesondere für die dargestellten Rückschlagklappen, Absperreinrichtungen und weiteren Elemente der dargestellten Fluidsysteme mit dem jeweiligen Fluidkreislauf zu.

### Ausführliche Beschreibung von Ausführungsbeispielen

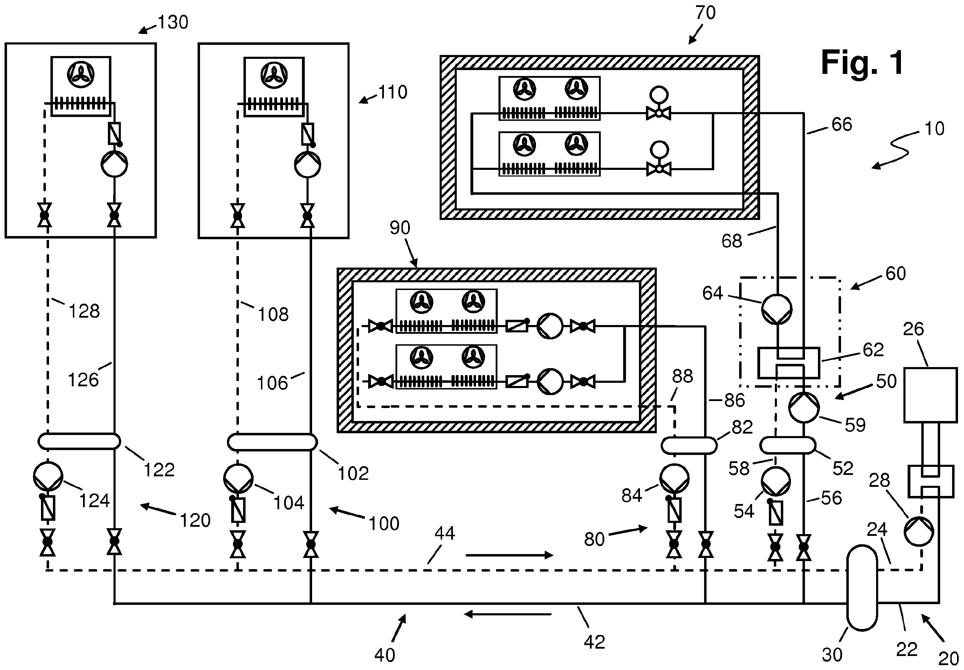

Fig. 1 zeigt eine schematische Darstellung eines Fluidsystems 10 mit einem Hauptverteilkreis 40 und an diesen über Strangweichen 52, 82, 102 und 122 angeschlossene, parallel geschaltete Nebenkreise 50, 80, 100 und 120 einer ersten Ausführung.

Das Fluidsystem 10 weist einen Erzeugerkreis 20 und einen Hauptverteilkreis 40 auf. Der Erzeugerkreis 20 weist eine Kältemaschine 26 auf, die über eine nicht näher spezifizierte Wärmeübertragungseinrichtung mit dem Hauptverteilkreis 40 fluidisch verbunden ist. Der Hauptverteilkreis 40 ist mit dem Erzeugerkreis 20 über eine hydraulische Weiche 30 verbunden, wobei ein Vorlauf 42 des Hauptverteilkreises 40 einem Vorlauf 22 des Erzeugerkreises 20 gegenüberliegt und ein Rücklauf 44 des Hauptverteilkreises 40 einem Rücklauf 24 des Erzeugerkreises 20 gegenüberliegt. Im Rücklauf 24 ist eine Pumpe 28 angeordnet, die zum Umwälzen des Fluids im Erzeugerkreis 20 über die Wärmeübertragungseinrichtung und durch die hydraulische Weiche 30 vorgesehen ist. Über die hydraulische Weiche 30 ist der Hauptverteilkreis 40 von dem Erzeugerkreis 20 entkoppelt.

Die Kältemaschine 26 ist beispielsweise als Wärmepumpe ausgebildet und bringt über die Wärmeübertragungseinrichtung das Fluid, das im Hauptverteilkreis 40 und über die hydraulische Weiche 30 teilweise im Erzeugerkreis 20 geführt ist, auf Temperatur. In dem gezeigten Fluidsystem 10 wird das Fluid über die Kältemaschine 26 soweit herabgekühlt, dass dieses im Vorlauf 22 und im Vorlauf 42 am Ausgang der hydraulischen Weiche im Wesentlichen eine Temperatur von -4°Celcius aufweist. An den Vorlauf 42 sind vier Nebenkreise 50, 80, 100 und 120 angeschlossen. Die Nebenkreise 50, 80, 100, 120 sind über Strangweichen 52, 82, 102 und 122 mit dem Hauptverteilkreis 40 verbunden. Der Vorlauf 56, 86, 106, 126 der Nebenkreise 50, 80, 100 und 120 ist dabei mit dem Vorlauf 42 des Hauptverteilkreises 40 und der Rücklauf 58, 88, 108 und 128 der Nebenkreise 50, 80, 100 und 120 ist mit dem Rücklauf 44 des Hauptverteilkreises 40 verbunden.

In der Darstellung von Fig. 1 beginnen der Vorlauf und der Rücklauf der jeweiligen Nebenkreise 50, 80, 100 und 120 direkt am Verbindungspunkt zu dem Vorlauf 42 und dem Rücklauf 44 des Hauptverteilkreises 40. Der Vorlauf und der Rücklauf der jeweiligen Nebenkreise 50, 80, 100 und 120 erstrecken sich daher über die Strangweichen 52, 82, 102 und 122 hinweg.

Die Nebenkreise 50, 80, 100 und 120 haben es gemein, dass im Rücklauf 58, 88, 108, 128 jeweils eine Pumpe 54, 84, 104, 124 als drehzahlgeregelte Pumpe in Fluidströmungsrichtung den Strangweichen 52, 82, 102, 122 nachgeschaltet angeordnet ist. Zusätzlich sind Absperreinrichtungen und Rückschlagklappen eingezeichnet, die zum einen ein Abtrennen der jeweiligen Nebenkreise 50, 80, 100, 120 ermöglichen und ein Zurückströmen von Fluid verhindern. Diese werden im Folgenden nicht näher erläutert.

Durch die hydraulische Parallelschaltung der Nebenkreise 50, 80, 100, 120 wird der hydraulische Abgleich im Hauptverteilkreis 40 bereitgestellt. Das Fluidsystem 10 eignet sich daher insbesondere für weit verzweigte Fluidkreisläufe, wie sie beispielsweise bei Supermärkten mit einer Vielzahl an Kühleinrichtungen oder in Gebäuden vorgesehen sind. Die Pumpen 54, 84, 104 und 124 regeln die Menge des Fluids, welches über die Nebenkreise 50, 80, 100, 120 geführt wird. Daher kann im Hauptverteilkreis 40 auf eine zentrale Umwälzeinrichtung verzichtet werden. In den jeweiligen Nebenkreisen 50, 80, 100, 120 können verschieden Verbraucher 70, 90, 110, 130 angeordnet sein. Zudem können auch mehrere Verbraucher 70, 90, 110 und 130 in den jeweiligen Nebenkreisen 50, 80, 100 und 120 vorgesehen sein.

In dem ersten Nebenkreis 50 ist ein Verbraucher 70 vorgesehen, der als Tiefkühlraum ausgebildet ist. Um die erforderliche Temperatur im Verbraucher 70 zu erzeugen, ist der Nebenkreis 50 über eine Wärmeübertragungseinrichtung 60, die einen Wärmetauscher 62 aufweist, mit einem weiteren Fluidkreislauf verbunden. Der Nebenkreis 50 weist im Vorlauf 56 eine der Strangweiche 52 in Fluidströmungsrichtung nachgelagerte Pumpe 59 auf, welche den Durchfluss des Fluids durch die Wärmeübertragungseinrichtung 60 auf Seite des Nebenkreises 50, im Zusammenspiel mit der Pumpe 54, regelt. Eine Pumpe 64 der Wärmeübertragungseinrichtung 60 regelt den Durchfluss des Fluids in dem separaten Fluidkreislauf und ist in einem Rücklauf 68 des separaten Fluidkreislaufs angeordnet. In einem Vorlauf 66 des separaten Fluidkreislaufs befinden sich im Verbraucher 70 elektronische Expansionsventile, die über einen Schrittmotor angesteuert werden.

Die Wärmeübertragungseinrichtung 60 ist erforderlich, um die Temperatur des Fluids im Vorlauf 42 und im Vorlauf 56 von etwa -4° Celsius auf -20° Celsius zu bringen.

Anstelle eines einzelnen Verbrauchers 70 können auch mehrere Verbraucher 70 parallel geschaltet im weiteren Fluidkreislauf vorgesehen sein.

Der zweite Verbraucher 90 im Nebenkreis 80 ist als Kühlraum ausgebildet. Für den Kühlraum ist die Temperatur ausreichend, die über den Vorlauf 42 und den Vorlauf 86 bereitgestellt wird. Daher weist der Nebenkreis 80 keine Wärmeübertragungseinrichtung 60 oder eine vergleichbare Vorrichtung auf. Der Vorlauf 86 ist im Verbraucher 90 aufgeteilt, wobei den jeweiligen Strängen eine weitere Pumpe zugeordnet ist. In Abhängigkeit des benötigten Kühlbedarfs wird die Leistung der Pumpen erhöht oder verringert. Dementsprechend wird mehr Fluid über den Vorlauf 86 gefördert. Entsprechend wird die Pumpe 84 so gesteuert, dass auch eine größere Menge an Fluid über die Strangweiche 82 hinweg abgezogen und dem Rücklauf 44 zugeführt wird. Vom Rücklauf 44 aus strömt das erwärmte Fluid, das beispielsweise eine Temperatur von im Wesentlichen 0° aufweist, zu der hydraulischen Weiche 30. Das Fluid durchströmt die hydraulische Weiche 30 und wird über die Pumpe 28 der Wärmeübertragungseinrichtung des Erzeugerkreises 20 zugeführt, in dem ein Absenken der Temperatur des Fluids über die Kältemaschine 28 erfolgt. Anschließend wird das Fluid über den Vorlauf 22 und die hydraulische Weiche 30 wieder dem Vorlauf 42 und damit den Nebenkreisen 50, 80, 100, 120 zugeführt.

Die Nebenkreise 100 und 120 sind im Wesentlichen identisch ausgebildet und weisen Verbraucher 110 und 130 auf, die beispielsweise als Kühlregale ausgebildet sind. Diese weisen eine separate Umwälzpumpe auf, sodass die Verbraucher 110 und 130 je nach geforderten Kühlbedarf die erforderliche Menge an Fluid beziehen.

In Fig. 1 weist jeder der Nebenkreise 50, 80, 100 und 120 je nur einen Verbraucher 70, 90, 110 und 130 auf. Eine solche Ausführung wird sich jedoch in der Praxis kaum wiederfinden. Insbesondere dient das Fluidsystem 10 dazu Nebenkreise 50, 80, 100, 120 mit jeweils mehreren Verbrauchern 70, 90, 110, 130 in den jeweiligen Nebenkreisen 50, 80, 100, 120 über die Strangweichen 52, 82, 102, 122 vom Hauptverteilkreis 40 zu entkoppeln.

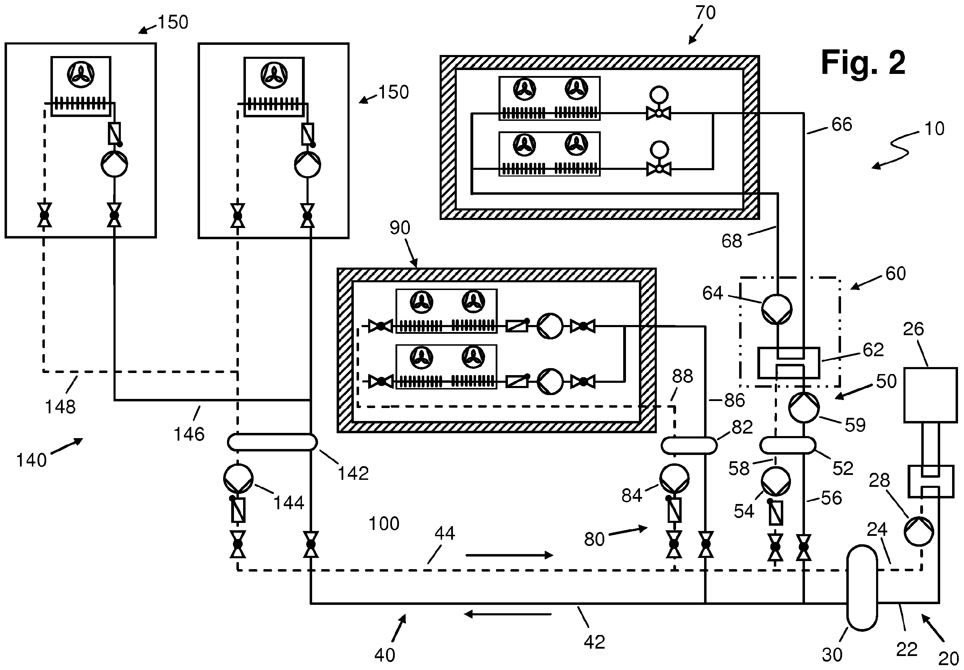

Fig. 2 zeigt eine weitere Ausführung des Fluidsystems 10, wobei anstelle von Nebenkreisen 100 und 120 ein Nebenkreis 140 vorgesehen ist, der zwei Verbraucher 150 aufweist. Die Verbraucher 150 sind als Kühlregal ausgebildet und entsprechen im Wesentlichen den Verbrauchern 110 und 130. Fig. 2 zeigt für den Nebenkreis 140, der über eine Strangweiche 142 an den Hauptverteilkreis 40 angeschlossen ist, die Anordnung mehrerer Verbraucher 150 in einem separaten Nebenkreis 140. Beispielsweise kann der Nebenkreis 140 anstelle der zwei Verbraucher 150 mehrere Verbraucher 150 aufweisen. Es ist auch möglich, andere Verbraucher, wie beispielsweise den Verbraucher 90, zusätzlich bei einem Nebenkreis mit Verbrauchern 150 vorzusehen.

In der gezeigten Ausführungsform sind jedoch die einzelnen Verbraucher 70, 90, 110, 130 und 150 nach ihrer Ausbildung in Gruppen zusammengefasst. Das bedeutet, dass mehrere Tiefkühlräume (Verbraucher 70) in einem separaten Nebenkreis 50 zusammengefasst sind. Die Tiefkühlräume sind dabei parallel geschaltet. Ferner können mehrere Kühlräume (Verbraucher 90) ebenfalls in einem separaten Nebenkreis 80 zusammengefasst und parallel geschaltet sein. Kühlregale (Verbraucher 110, 130, 150) sind, wie in Fig. 2 angedeutet, ebenfalls parallel geschaltet und in einem Nebenkreis 140 zusammengefasst.

Darüber hinaus können beispielsweise mehrere Verbraucher 150 in zwei, drei oder mehreren separaten Nebenkreisen zusammengefasst sein, wobei jeder dieser Nebenkreise beispielsweise nur Kühlregale umfasst. Die Zusammenfassung der einzelnen Verbraucher zu den Nebenkreisen 50, 80, 100, 120, 140 kann neben der Art der Verbraucher 70, 90, 110, 130 und 150 auch nach Maßgabe deren Position, beispielsweise in einem Supermarkt, erfolgen.

In einem Teillastbetrieb, wobei die einzelnen Verbraucher 70, 90, 110, 130 und 150 einen durchschnittlichen Kühlbedarf aufweisen, ist der Energiebedarf geringer als bei bekannten Ausführungen aus dem Stand der Technik. Bei bekannten Ausführungen aus dem Stand der Technik sind einzelne Nebenkreise ohne eine Strangweiche 52, 82, 102, 122 und 142 an einen Hauptverteilkreis angeschlossen. Zudem ist bei den Ausführungen aus dem Stand der Technik eine zentrale Umwälzpumpe für einen Hauptverteilkreis vorgesehen. Bei dem hierin beschriebenen Fluidsystem 10 entnehmen die Nebenkreise 50, 80, 100, 120 und 140 über die Strangweichen 52, 82, 102, 122, 142 und die zugeordneten Pumpen 54, 84, 104, 124 und 144 Fluid aus dem Hauptverteilkreis 40. Der Volumenstrom an Fluid im Hauptverteilkreis 40 ergibt sich daher direkt über den Bedarf der Verbraucher 70, 90, 110, 130, 150, wobei der hydraulische Abgleich über die Strangweichen 52, 82, 102, 122 und 142 erfolgt. Liegt ein höherer Bedarf in einem der Nebenkreise 50, 80, 100, 120, 140 vor, so führt dies nicht zu einem Leistungsverlust in den anderen Nebenkreisen. Zudem kann über die Strangweichen 52, 82, 102, 122 und 142 - in Abhängigkeit der Dimensionierung und Auslegung - Kälte gespeichert werden. Die Strangweichen 52, 82, 102, 122 und 142 können daher auch als Puffer dienen.

Ein weiterer Vorteil des Fluidsystems 10 besteht bei einem Ausfall in einem der Nebenkreise 50, 80, 100, 120, 140 in der Beschränkung auf den jeweiligen Nebenkreis. Dies wird auch durch die dezentrale Anordnung der Strangweichen und der zugehörigen Pumpen erreicht. Fällt eine dieser Pumpen 54, 84, 104, 124, 144 aus, so hat dies keine Auswirkungen auf eine der anderen Pumpen oder einen anderen Nebenkreis. Bei einer zentralen Umwälzpumpe im Hauptverteilkreis 40, wie dies im Stand der Technik üblich ist, würde ein Ausfall dieser Umwälzpumpe zu einem Ausfall des gesamten Systems führen. Ein solcher Systemausfall kann einen hohen Schaden verursachen, wenn beispielsweise das gesamte Kühlgut entsorgt werden muss, da die Kerntemperatur des Kühlguts über eine Mindesttemperatur angestiegen ist.

Die Parallelschaltung der Nebenkreise 50, 80, 100, 120 und 140 über die zugehörigen Strangweichen 52, 82, 102, 122, 142 und Pumpen 54, 84, 104, 124, 144 ermöglicht insbesondere für Fluidsysteme 10 mit mehreren parallelen Strängen (Nebenkreise) eine bedarfsabhängige Zuführung an Fluid, sodass hierüber Energie eingespart werden kann. Der Betrieb der Kältemaschine 26 wird weiter verbessert, da sowohl über die hydraulische Weiche 30 als auch über die Strangweichen 52, 82, 102, 122 und 142 ein Ausgleich und ein hydraulischer Abgleich bereitgestellt werden.

### Bezugszeichenliste

- 10: Fluidsystem
- 20: Erzeugerkreis
- 22: Vorlauf
- 24: Rücklauf
- 26: Kältemaschine
- 28: Pumpe
- 30: hydraulische Weiche
- 40: Hauptverteilkreis
- 42: Vorlauf
- 44: Rücklauf
- 50: Nebenkreis
- 52: Strangweiche
- 54: Pumpe
- 56: Vorlauf
- 58: Rücklauf
- 59: Pumpe
- 60: Wärmeübertragungseinrichtung
- 62: Wärmetauscher
- 64: Pumpe
- 66: Vorlauf
- 68: Rücklauf
- 70: Verbraucher
- 80: Nebenkreis
- 82: Strangweiche
- 84: Pumpe
- 86: Vorlauf
- 88: Rücklauf
- 90: Verbraucher
- 100: Nebenkreis
- 102: Strangweiche
- 104: Pumpe
- 106: Vorlauf
- 108: Rücklauf
- 110: Verbraucher
- 120: Nebenkreis
- 122: Strangweiche
- 124: Pumpe
- 126: Vorlauf
- 128: Rücklauf
- 130: Verbraucher
- 140: Nebenkreis
- 142: Strangweiche
- 144: Pumpe
- 146: Vorlauf
- 148: Rücklauf
- 150: Verbraucher

## Patentansprüche

1. Fluidsystem mit einem Hauptverteilkreis (40) mit einem Vorlauf (42) und einem Rücklauf (44), in dem ein Fluid zur Wärmeübertragung geführt ist, wobei der Hauptverteilkreis (40) an eine Einrichtung zur Bereitstellung einer einstellbaren Temperatur für das Fluid angeschlossen ist, und mit mindestens zwei an den Hauptverteilkreis (40) angeschlossenen Nebenkreisen (50; 80; 100; 120; 140), wobei die Nebenkreise (50; 80; 100; 120; 140) jeweils mindestens einen Verbraucher (70; 90; 110; 130; 150) und eine hydraulische Strangweiche (52; 82; 102; 122; 142) aufweisen, über welche die Nebenkreise (50; 80; 100; 120; 140) an den Hauptverteilkreis (40) angeschlossen sind, ferner aufweisend eine im Rücklauf (58; 88; 108; 128; 148) der Nebenkreise (50; 80; 100; 120; 140) angeordnete erste Fördereinrichtung, die der Strangweiche (52; 82; 102; 122; 142) in Fluidströmungsrichtung nachgeschaltet ist.

2. Fluidsystem nach Anspruch 1, wobei die erste Fördereinrichtung im Rücklauf (58; 88; 108; 128; 148) des Nebenkreises (50; 80; 100; 120; 140) in Fluidströmungsrichtung vor einer Verbindungsstelle an den Rücklauf (44) des Hauptverteilkreises (40) angeordnet ist.

3. Fluidsystem nach Anspruch 1 oder 2, aufweisend mehrere Nebenkreise (50; 80; 100; 120; 140), die jeweils über eine separate Strangweiche (52; 82; 102; 122; 142) an den Hauptverteilkreis (40) angeschlossen sind, wobei jedem Nebenkreis (50; 80; 100; 120; 140) eine Verbrauchergruppe zugeordnet ist.

4. Fluidsystem nach Anspruch 3, wobei die Verbrauchergruppen sich durch deren Art, Größe, Position, benötigte Fluidtemperatur und/oder deren Leistungsvermögen unterscheiden.

5. Fluidsystem nach einem der Ansprüche 1 bis 4, wobei der mindestens eine Verbraucher (70; 90; 110; 130; 150) eine zweite Fördereinrichtung aufweist.

6. Fluidsystem nach Anspruch 3 oder 4, wobei mindestens ein Nebenkreis (50; 80; 100; 120; 140) eine dritte Fördereinrichtung aufweist.

7. Fluidsystem nach einem der Ansprüche 1 bis 6, wobei die erste Fördereinrichtung, die zweite Fördereinrichtung und/oder die dritte Fördereinrichtung eine drehzahlgeregelte Pumpe sind.

8. Fluidsystem nach einem der Ansprüche 1 bis 7, wobei der Hauptverteilkreis (40) eine hydraulische Weiche (30) aufweist, über die der Hauptverteilkreis (40) mit der Einrichtung zur Bereitstellung einer einstellbaren Temperatur gekoppelt ist.

9. Fluidsystem nach einem der Ansprüche 1 bis 8, wobei die Einrichtung zur Bereitstellung einer einstellbaren Temperatur einen separaten Fluidkreislauf aufweist, der mit dem Fluidkreislauf des Hauptverteilkreises (40) thermisch direkt oder indirekt verbunden ist.

## Claims

1. Fluid system having a main distribution circuit (40) with a preflow (42) a return flow (44), in which a fluid is arranged for heat exchange, wherein the main distribution circuit (40) is arranged to an unit for providing an adjustable temperature for the fluid, and with at least two, secondary circuits (50; 80; 100; 120;140) arranged to the main distribution circuit (40), wherein the secondary circuits (50; 80; 100; 120; 140) each comprise at least one load (70; 90; 110; 130; 150) and a hydraulic strand diverter (52; 82; 102; 122; 142), via which the secondary circuits (50; 80; 100; 120; 140) are arranged to the main distribution circuit (40), further comprising, arranged in the return flow (58; 88; 108; 128; 148) of the secondary circuits (50; 80; 100; 120; 140), a first conveying unit, which is arranged downstream in direction of fluid flow of the hydraulic strand diverter (52; 82; 102; 122; 142).

2. Fluid system according to claim 1, wherein the first conveying unit is arranged in the return flow (58; 88; 108; 128; 148) of a secondary circuit (50; 80; 100; 120; 140) upstream the direction of fluid flow to a conduction point at the return flow (44) of the main distribution circuit (40).

3. Fluid system according to claim 1 or 2, comprising a plurality of secondary circuits (50; 80; 100; 120; 140), each is arranged via a separate hydraulic strand diverter (52; 82; 102; 122; 142) to the main distribution circuit (40), whereby each secondary circuit (50; 80; 100; 120; 140) is assigned to a load-group.

4. Fluid system according to claim 3, wherein the load groups are distinguished by their type, size, location, required fluid temperature, and/or their capacity.

5. Fluid system according to any of claims 1 to 4, wherein the at least one load (70; 90; 110; 130; 150) comprises a second conveying unit.

6. Fluid system according to claim 3 or 4, wherein at least one secondary circuit (50; 80; 100; 120; 140) comprises a third conveying unit.

7. Fluid system according to any of claims 1 to 6, wherein the first conveying unit, the second conveying unit and/or the third conveying unit are a speed-controlled pump.

8. Fluid system according to any of claims 1 to 7, wherein the main distribution circuit (40) comprises a hydraulic switch (30), via which the main distribution circuit (40) is coupled to the unit for providing an adjustable temperature.

9. Fluid system according to any of claims 1 to 8, wherein the unit for providing an adjustable temperature comprising a separate fluid circuit, which is connected to the main distribution circuit (40) thermally directly or indirectly.

## Revendications

1. Système fluidique avec un circuit répartiteur principal (40) avec une canalisation aller (42) et une canalisation retour (44), dans lequel un fluide est guidé pour le transfert de chaleur, dans lequel le circuit répartiteur principal (40) est raccordé à un dispositif pour la fourniture d'une température réglable pour le fluide, et avec au moins deux circuits secondaires (50 ; 80 ; 100 ; 120 ; 140) raccordés au circuit répartiteur principal (40), dans lequel les circuits secondaires (50 ; 80 ; 100 ; 120 ; 140) présentent respectivement au moins un consommateur (70 ; 90 ; 110 ; 130 ; 150) et un séparateur à ligne (52 ; 82 ; 102 ; 122 ; 142) hydraulique, par l'intermédiaire duquel les circuits secondaires (50 ; 80 ; 100 ; 120 ; 140) sont raccordés au circuit répartiteur principal (40), présentant en outre un premier dispositif de transport disposé dans la canalisation retour (58 ; 88 ; 108 ; 128 ; 148) des circuits secondaires (50 ; 80 ; 100 ; 120 ; 140), qui est monté en aval du séparateur à ligne (52 ; 82 ; 102 ; 122 ; 142) dans la direction d'écoulement de fluide.

2. Système fluidique selon la revendication 1, dans lequel le premier dispositif de transport est disposé dans la canalisation retour (58 ; 88 ; 108 ; 128 ; 148) du circuit secondaire (50 ; 80 ; 100 ; 120 ; 140) dans la direction d'écoulement de fluide devant un point de liaison sur la canalisation retour (44) du circuit répartiteur principal (40).

3. Système fluidique selon la revendication 1 ou 2, présentant plusieurs circuits secondaires (50 ; 80 ; 100 ; 120 ; 140), qui sont raccordés respectivement par l'intermédiaire d'un séparateur à ligne (52 ; 82 ; 102 ; 122 ; 142) séparé au circuit répartiteur principal (40), dans lequel un groupe de consommateurs est associé à chaque circuit secondaire (50 ; 80 ; 100 ; 120 ; 140).

4. Système fluidique selon la revendication 3, dans lequel les groupes de consommateurs se différencient par leur type, taille, position, température de fluide nécessaire et/ou leur performance.

5. Système fluidique selon l'une quelconque des revendications 1 à 4, dans lequel le au moins un consommateur (70 ; 90 ; 110 ; 130 ; 150) présente un deuxième dispositif de transport.

6. Système fluidique selon la revendication 3 ou 4, dans lequel au moins un circuit secondaire (50 ; 80 ; 100 ; 120 ; 140) présente un troisième dispositif de transport.

7. Système fluidique selon l'une quelconque des revendications 1 à 6, dans lequel le premier dispositif de transport, le deuxième dispositif de transport et/ou le troisième dispositif de transport sont une pompe à régulation de vitesse de rotation.

8. Système fluidique selon l'une quelconque des revendications 1 à 7, dans lequel le circuit répartiteur principal (40) présente un séparateur hydraulique (30), par l'intermédiaire duquel le circuit répartiteur principal (40) est accouplé au dispositif pour la fourniture d'une température réglable.

9. Système fluidique selon l'une quelconque des revendications 1 à 8, dans lequel le dispositif pour la fourniture d'une température réglable présente un circuit de fluide séparé, qui est relié directement ou indirectement de manière thermique au circuit de fluide du circuit répartiteur principal (40).
